# EUROPÄISCHE PATENTSCHRIFT

(11) **EP 1 206 655 B1**
(45) Veröffentlichungstag und Bekanntmachung des Hinweises auf die Patenterteilung: **19.04.2006**
(21) Anmeldenummer: 00960394.5
(22) Anmeldetag: 04.08.2000
(51) Int. Cl.: F16J 15/32, F16J 15/40

(54) **WELLENABDICHTUNG FÜR EINEN CO2-KOMPRESSOR**
SHAFT SEALING DEVICE FOR A CO2 COMPRESSOR
DISPOSITIF D'ETANCHEITE D'ARBRE DESTINE A UN COMPRESSEUR A CO 2

(30) Priorität: 06.08.1999 DE 19937249
(43) Veröffentlichungstag der Anmeldung: 22.05.2002
(73) Patentinhaber: LuK Fahrzeug-Hydraulik GmbH & Co. KG, 61352 Bad Homburg (DE)
(72) Erfinder: SEIPEL, Volker, 64625 Bensheim (DE); HINRICHS, Jan, 61381 Friedrichsdorf (DE); RAISER, Harald, 72336 Balingen (DE)
(74) Vertreter: Gleiss, Alf-Olav
(86) Internationale Anmeldenummer: PCT/EP2000/007586
(87) Internationale Veröffentlichungsnummer: WO 2001/011275

(56) Entgegenhaltungen:
- EP-A- 1 004 801
- DE-A- 19 712 480
- GB-A- 1 387 255
- GB-A- 2 141 797
- US-A- 3 938 813
- US-A- 4 789 166
- US-A- 5 039 112

## Beschreibung

Die Erfindung betrifft eine Wellenabdichtung für einen CO₂₋Kompressor mit einer Abdichtungseinrichtung.

CO₂-Kompressoren der hier angesprochenen Art sind bekannt. Sie werden im Zusammenhang mit Klimaanlagen verwendet.

In US 5 039 112 A (Ulrich et al.) wird eine Wellenabdichtung für einen Kompressor einer Klimaanlage eines Fahrzeugs beschrieben, die ein Dichtelement mit einem Gasblockiersystem aufweist. In GB 2 141 797 A (Hatch, Frederick) und in US 3 938 813 A (Forch, Hans) wird jeweils eine Beschichtung des Dichtelementes zur Reduzierung der Durchlässigkeit der Dichtung für Gase, hier für Heliumgase, beschrieben. In DE 197 12 480 A1 (Reinfrank, Ulrich et al.) ist eine Gleitringdichtung für die Abdichtung einer Antriebswelle eines CO₂-Kältemittelverdichters gegenüber einem Verdichtergehäuse einer Klimaanlage beschrieben. Die Gleitringdichtung weist ein Paar Gleitringe auf, wobei die Gleitringe aus Sinterhartmaterial gefertigt sind. In der nicht vorveröffentlichten EP-A-1 004 801 (Hosokawa, Atsushi et al.) wird eine Wellenabdichtung, die ein zwischen einer Welle und einem Gehäuse angeordnetes Dichtungselement aufweist, beschrieben. Das Dichtungselement umfasst ein erstes Dichtungselement und ein zweites Dichtungselement, die jeweils aus einem elastischen Material gefertigt sind und mindestens ein Stützelement umfassen sowie eine CO₂-undurchlässige Folie. Das unter Druck stehende Kompressorgas CO₂ kann sich in einem Raum ausbreiten, der sich von der Seitenwand des ersten Dichtungselementes sowie der der Welle abgewandten Seite der Dichtungslippe und der der Welle zugewandten Seite des Gehäuses erstreckt. Somit wird ein Druck auf die Oberseite der Dichtungslippe des ersten Dichtungselementes ausgeübt. Nachteilig sind in allen beschriebenen Wellenabdichtungen die großen Reibungskräfte zwischen der Wellenabdichtung und der Welle, die zu einem nachhaltigen Verschleiß führen.

Aufgabe der Erfindung ist es, eine Wellenabdichtung für CO₂₋Kompressoren zu schaffen, die diesen Nachteil nicht aufweist.

Zur Lösung dieser Aufgabe wird eine Wellenabdichtung für einen CO₂-Kompressor vorgeschlagen, die die in Anspruch 1 genannten Merkmale aufweist. Die Wellenabdichtung zeichnet sich durch eine Verschleißschutzeinrichtung aus, die in den Bereichen, in denen sich drehende und feststehende Teile der Wellenabdichtung berühren, den Verschleiß reduziert. Mit einer solchen Verschleißschutzeinrichtung, insbesondere, wenn diese als Verschleißschutzschicht ausgeprägt ist, lassen sich Reibungskräfte zwischen Wellenabdichtung und Welle deutlich reduzieren. Eine Verschleißschutzeinrichtung kann beispielsweise durch eine Beschichtung der betroffenen Flächen mit einem widerstandsfähigen Material erreicht werden. Bevorzugt wird ein Ausführungsbeispiel der Wellenabdichtung, das sich durch eine Entlastungseinrichtung auszeichnet, die mindestens einen O-Ring aufweist und die Reibungskräfte zwischen Wellenabdichtung und einer zugeordneten Welle begrenzt oder vermindert. Es ist insbesondere vorgesehen, dass die Druckverhältnisse im Bereich der Wellenabdichtung durch die Entlastungseinrichtung so eingestellt werden, dass im Berührungsbereich zwischen Wellenabdichtung, beziehungsweise Wellendichtring, und der zugeordneten Welle definierte Reibungskräfte gegeben sind. Es kann hier auch eine separate Vorrichtung zur Reduzierung der Reibungskräfte vorgesehen werden.

Ein weiteres bevorzugtes Ausführungsbeispiel der Wellenabdichtung weist eine CO₂-Sperrvorrichtung auf, die einen Austritt des von dem CO₂-Kompressor geförderten Mediums vermeidet. Die CO₂₋Sperreinrichtung zeichnet sich dadurch aus, dass sie aus einem Material besteht, in dem CO₂ nicht oder zumindest nur in einem nur sehr geringen Umfang lösbar ist.

Ein bevorzugtes Ausführungsbeispiel des CO₂-Kompressors zeichnet sich dadurch aus, dass die Abdichteinrichtung als Wellendichtring ausgebildet ist. Es ist bekannt, zum Abdichten eines Wellendurchtritts Gleitringdichtungen zu verwenden Diese zeichnen sich allerdings durch einen aufwendigen Aufbau aus und sind entsprechend teuer. Ersetzt man nun derartige Gleitringdichtungen durch Wellendichtringe, so lassen sich sehr kompakte und kostengünstige Lösungen realisieren. Die CO₂-Sperreinrichtung ist so angeordnet, dass das CO₂ den Wellendichtring nicht angreifen kann, seine Materialeigenschaften also nicht beeinträchtigt.

Bevorzugt wird eine Ausführungsform der Wellenabdichtung, die sich dadurch auszeichnet, dass eine CO₂-dichte Sperrschicht als Sperreinrichtung vorgesehen ist. Diese lediglich als Schicht ausgebildete Sperreinrichtung zeichnet sich dadurch aus, dass sie nur sehr wenig Raum einnimmt, so dass die Wellenabdichtung ohne besondere Umbau- oder Vorbereitungsmaßnahmen in bestehende CO₂₋Kompressoren integriert werden kann.

Bevorzugt wird außerdem ein Ausführungsbeispiel der Wellenabdichtung, das sich dadurch auszeichnet, dass die Sperrschicht durch eine Beschichtung und/oder Bedampfung mit einem CO₂-dichten Material realisiert ist. Es ist hier also besonders einfach und preiswert möglich, eine CO₂-Sperre vorzusehen. Diese kann überdies sehr dünn sein.

Bevorzugt wird ein Ausführungsbeispiel der Wellenabdichtung, das sich dadurch auszeichnet, dass die Sperrschicht durch mindestens eine Folie realisierbar ist. Besonders bevorzugt wird eine Metallfolie, die bereits bei sehr dünnen Schichtdicken CO₂ sicher absperrt.

Bevorzugt wird ein Ausführungsbeispiel der Wellenabdichtung, das sich dadurch auszeichnet, dass die Sperrschicht auf die Oberfläche des Wellendichtrings aufgebracht ist. Es ist also möglich, hier eine Sperrschicht durch Beschichtung oder Bedampfung oder durch Aufbringung einer Folie zu realisieren. Bei Beschichtung und Bedampfung mit CO₂-dichtem Material sind besonders dünne Schichtstärken realisierbar.

Bevorzugt wird außerdem ein Ausführungsbeispiel der Wellenabdichtung, das sich dadurch auszeichnet, dass die Sperrschicht mindestens bereichsweise in den Wellendichtring integriert ist.

Weiterhin wird ein Ausführungsbeispiel einer Wellenabdichtung bevorzugt, das sich dadurch auszeichnet, dass die CO₂₋Sperreinrichtung durch den Wellendichtring selbst realisiert wird, indem dieser aus einem Material besteht, in dem CO₂ gar nicht oder nur in einem geringen Maße lösbar ist. Es bedarf in diesem Fall keiner zusätzlichen Einrichtungen, die CO₂-dichte Realisierung vorzusehen. Gegebenenfalls können sogar bestehende Wellenabdichtungen durch Austausch des Wellendichtrings mit einer CO₂-Sperre ausgebildet werden.

Besonders bevorzugt wird außerdem eine Ausführungsform der Wellenabdichtung, die sich dadurch auszeichnet, dass sie eine Gleitringdichtung umfasst, bei der die CO₂-Sperreinrichtung zwischen dem von dem CO₂-Kompressor geförderten Medium und der Gleitringdichtung angeordnet ist. Auf diese Weise wird verhindert, dass das Material der Gleitringdichtung von dem CO₂ angegriffen wird.

Bevorzugt wird ein Ausführungsbeispiel einer Wellenabdichtung, das sich dadurch auszeichnet, dass die Sperreinrichtung einen Vorratsraum umfasst, der mit einem Sperrmedium gefüllt ist. Dieses ist so gewählt, dass CO₂ nicht oder in einem nur sehr geringen Umfang löslich ist.

Ein Ausführungsbeispiel einer Wellenabdichtung wird deshalb bevorzugt, weil der Vorratsraum durch eine Verschlusseinrichtung abgeschlossen ist, die vorzugsweise als Balg, Rollmembran, axial verschiebbarer Wellendichtring oder als axial verschiebbarer Ringkolben ausgebildet ist. Verluste des in dem Vorratsraum vorhandenen Sperrmediums können auf diese Weise einfach ausgeglichen werden. Einerseits kann der Vorratsraum daher mit einem relativ geringen Ausgangsvolumen eines Sperrmediums gefüllt sein, andererseits kann auf aufwendige Nachfülleinrichtungen, über die ein Verlust des Sperrmediums im Vorratsraum ausgeglichen wird, verzichtet werden.

Besonders bevorzugt wird ein Ausführungsbeispiel der Wellenabdichtung, das sich dadurch auszeichnet, dass die Sperreinrichtung eine CO₂-dichte Verschlusseinrichtung umfasst. Wird der Vorratsraum mittels einer derartigen Verschlusseinrichtung abgeschlossen, kann als Sperrmedium auch ein herkömmliches Schmiermittel verwendet werden, da durch die CO₂-dichte Verschlusseinrichtung der Eintritt von CO₂ in das Sperrmedium vermieden wird.

Bevorzugt wird außerdem ein Ausführungsbeispiel der Wellenabdichtung, das sich dadurch auszeichnet, dass der Wellendichtring und/oder die Welle mit der Verschleißschutzeinrichtung versehen ist. Es ist also möglich, entweder nur den Wellendichtring oder die Welle mit einer Verschleißschutzeinrichtung zu versehen oder beide Teile.

Bevorzugt wird weiterhin ein Ausführungsbeispiel der Wellenabdichtung, das sich dadurch auszeichnet, dass die Verschleißschutzeinrichtung als mit dem Wellendichtring verbundener Verschleißring oder als mit der Welle zusammenwirkender Ring beziehungsweise Verschleißhülse ausgebildet ist.

Bei einem bevorzugten Ausführungsbeispiel der Wellenabdichtung ist vorgesehen, dass die auf der Welle aufliegende Kante des Wellendichtrings gewellt ausgebildet ist.

Schließlich wird ein Ausführungsbeispiel der Wellenabdichtung bevorzugt, das sich dadurch auszeichnet, dass der Verschleißring des Wellendichtrings gewellt ausgebildet ist.

Die Erfindung wird im folgenden anhand einer Zeichnung näher erläutert. Es zeigen:
- Figuren 1 bis 7: verschiedene Ausführungsbeispiele einer Wellenabdichtung mit Verschleißschutzeinrichtung;
- Figur 8: eine eine Entlastungseinrichtung aufweisende Wellenabdichtung, die nicht Teil der Erfindung ist;
- Figuren 9 und 10: zwei Beispiele einer mit einer Gleitringdichtung versehenen Wellenabdichtung, die nicht Teil der Erfindung ist.

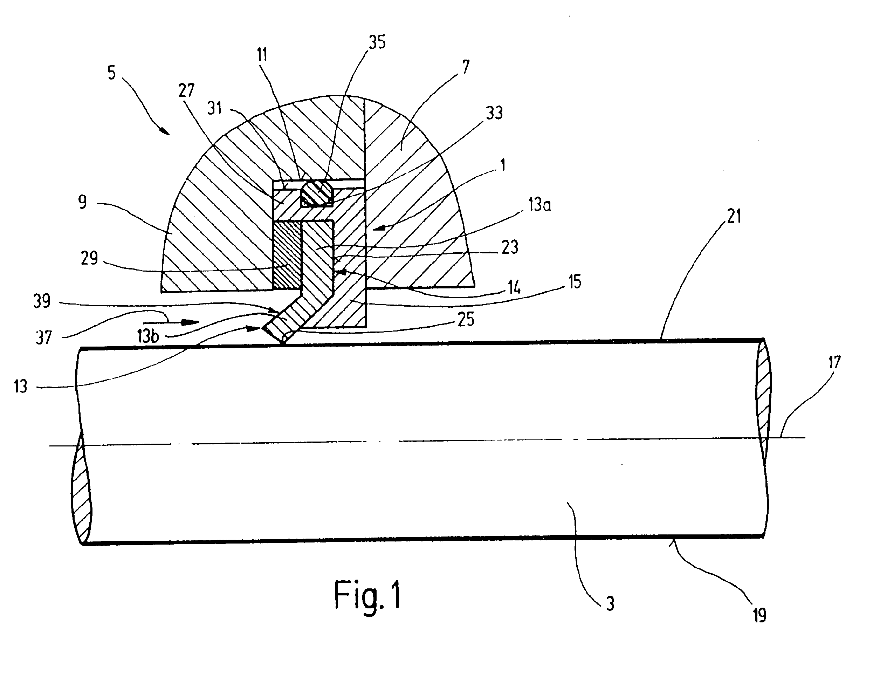

In Figur 1 ist ein Ausführungsbeispiel einer Wellenabdichtung 1 In einer stark schematisierten Prinzipdarstellung ist das Zusammenspiel zwischen Wellenabdichtung 1 und Welle 3 dargestellt. Daher ist von dem zugehörigen CO₂-Kompressor 5 lediglich ein kleiner Teil im Schnitt dargestellt, nämlich ein Ausschnitt eines Gehäuses mit einem ersten Gehäuseteil 7 und einem zweiten Gehäuseteil 9. Es handelt sich hier beispielsweise um den Grundkörper eines Gehäuses und um einen zugehörigen Deckel, der als Verschluss dient. Rein beispielhaft ist hier eine Nut 11 im zweiten Gehäuseteil 9 vorgesehen, die grundsätzlich auch in den ersten Gehäuseteil 7 eingebracht werden könnte. Denkbar ist es schließlich auch, dass zwei zusammenwirkende Nutabschnitte sowohl im ersten Gehäuseteil 7 als auch im zweiten Gehäuseteil 9 vorgesehen werden, um die die Wellenabdichtung 1 aufnehmende Nut 11 zu realisieren.

Die Darstellung gemäß Figur 1 lässt erkennen, dass die Nut 11 die Wellenabdichtung 1 aufnimmt, wobei die Nut 11 so dimensioniert ist, dass die Wellenabdichtung 1 von dem zweiten Gehäuseteil 9 fest mit Die Wellenabdichtung 1 umfasst eine einen Wellendichtring 13 aufweisende Abdichteinrichtung 14; der Wellendichtring 13 wirkt hier mit einem Stützring 15 zusammen. Der Wellendichtring 13 ragt, in radialer Richtung zur Welle 3, das heißt in Richtung der Mittelachse 17 der Welle 3, gegenüber dem Stützring etwas vor. Das heißt, der Stützring 15 endet in einem Abstand gegenüber der Wellenoberfläche 19, die hier mit einer als Beschichtung ausgebildeten Verschleißschutzeinrichtung 21 versehen ist. Der Wellendichtring 13 liegt unmittelbar auf der Wellenoberfläche 19 auf.

Der Stützring 5 ist im Berührungsbereich 23 mit dem Wellendichtring 13 mit einer Kontur versehen, die auf die des Wellendichtrings 13 abgestimmt ist. Dadurch ist sichergestellt, dass sich der Wellendichtring 13 flächig am Stützring 15 abstützen kann. Die Schnittdarstellung gemäß Figur 1 lässt erkennen, dass der Berührungsbereich 23 quasi abgewinkelt ist. Entsprechend ist der Wellendichtring 13 mit einer Kontur versehen, die im wesentlichen V-förmig ist. Dabei verläuft ein erster Schenkel 13a des Wellendichtrings 13 im wesentlichen radial zur Drehachse 17, während ein zweiter Schenkel 13b des Wellendichtrings 13 unter einem Winkel von circa 45° gegenüber dem ersten Schenkel geneigt verläuft. Der Wellendichtring 13 liegt mit einer Kante 25 auf der Wellenoberfläche 19 auf.

Der Stützring 15 weist an seinem der Welle 3 abgewandten Ende des Wellendichtrings 13 eine Schulter 27 auf, an der der Wellendichtring 13 anliegt. Die in Richtung der Drehachse 17 gemessene Breite der Schulter 27 ist so gewählt, dass sie den Wellendichtring 13 und außerdem einen Haltering 29 überspannt, mit dem der Wellendichtring 13 gegen den Stützring 15 gepresst wird. In die radial außenliegende Außenfläche 31 des Stützrings 15 beziehungsweise der Schulter 27 ist eine Nut 33 eingebracht, die ein Dichtelement, hier beispielhaft einen O-Ring 35, aufnimmt. Insgesamt wird deutlich, dass die Wellenabdichtung 1 sich bei dem hier dargestellten Ausführungsbeispiel aus dem Wellendichtring 13, dem Stützring 15, dem Haltering 29 und dem O-Ring 35 zusammensetzt, wobei die Dicke der Elemente der Wellenabdichtung 1 so gewählt ist, dass diese dichtend in der Nut 11 untergebracht und dort gehalten ist.

Durch einen Pfeil 37 ist in Figur 1 angedeutet, dass der von dem CO₂-Kompressor 5 aufgebaute Druck von links auf die Wellenabdichtung 1 beziehungsweise den Wellendichtring 13 und den Stützring 15 einwirkt. Der Wellendichtring 13 wird also gegen den Stützring 15 gepresst. Durch letzteren wird verhindert, dass bei einem hohen Druck der Wellendichtring 13 umschlägt und die Dichtungswirkung aufgehoben wird.

Die Schnittdarstellung gemäß Figur 1 lässt erkennen, dass die Dicke des Stützrings 15 in dem Bereich in Richtung zur Drehachse 17 zunimmt, der aus der Nut 11 herausragt. Diese Ausgestaltung gibt dem Stützring 15 eine hohe Stabilität. Außerdem ist es so möglich, den Wellendichtring 13 relativ dünn auszugestalten, weil die im Betrieb des Kompressors entstehenden, auf den Wellendichtring 13 wirkenden Kräfte durch den Stützring 15 sicher abgefangen werden.

Zur Vereinfachung der Darstellung ist in Figur 1 die Wellenabdichtung 1 lediglich oberhalb der Welle 3 im Schnitt wiedergegeben. Es ist jedoch festzuhalten, dass die Wellenabdichtung 1 selbstverständlich die Welle 3 ringförmig umgibt.

Bei dem in Figur 1 dargestellten Ausführungsbeispiel ist der Wellendichtring 13 aus einem Material hergestellt, in dem CO₂ nicht oder praktisch nicht lösbar ist. Der Wellendichtring selbst stellt hier also eine CO₂-Sperreinrichtung 39 dar.

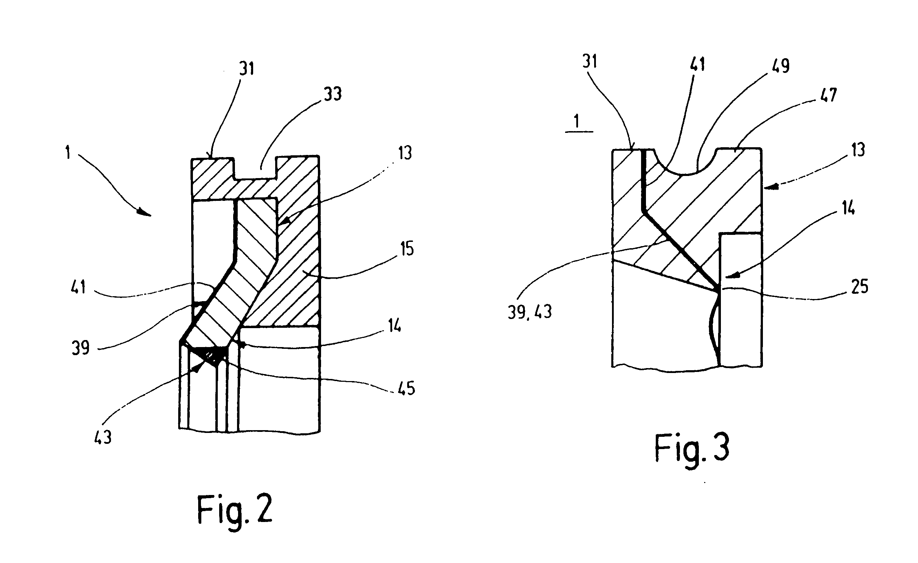

Die Prinzipskizze gemäß Figur 2 zeigt einen Teilquerschnitt durch ein weiteren Ausführungsbeispiel einer Wellenabdichtung 1. Teile, die mit denen übereinstimmen, die anhand von Figur 1 erläutert wurden, werden hier nicht näher beschrieben. Es wird insoweit auf die Beschreibung zu Figur 1 verwiesen. Zur Vereinfachung der Darstellung ist in Figur 2 außerdem die Welle 3 weggelassen.

Die Wellenabdichtung 1 gemäß Figur 2 zeichnet sich dadurch aus, dass die CO₂-Sperreinrichtung 39 durch eine auf eine in axialer Richtung weisende Oberfläche des Wellendichtrings 13 aufgebrachte Schicht 41 realisiert ist, die auf der Seite angeordnet ist, auf die das unter Überdruck stehende CO₂ auf den Wellendichtring 13 wirkt. Die Schicht 41 ist wesentlich dünner als der Wellendichtring 13. Dieser kann bei dem hier wiedergegebenen Ausführungsbeispiel aus einem Material bestehen, in dem grundsätzlich CO₂ mehr oder weniger lösbar ist. Wesentlich ist, dass die CO₂-Sperreinrichtung 39 beziehungsweise die Schicht 41 den Wellendichtring 13 vor negativen Einflüssen des CO₂' dadurch schützt, dass die Schicht 41 aus einem Material besteht, in dem CO₂ nicht oder praktisch nicht lösbar ist.

Die Schicht 41 kann durch Beschichtung und/oder Bedampfung des Wellendichtrings 13 mit einem CO₂-dichten Material realisiert werden. Es ist auch möglich, eine CO₂-dichte Folie, beispielsweise eine Metallfolie, mit dem Wellendichtring 13 zu kombinieren beziehungsweise auf diesen aufzubringen.

Die in Figur 2 wiedergegebene Wellenabdichtung 1 zeichnet sich noch durch eine Verschleißschutzeinrichtung 43 aus, die hier als Verschleißring 45 realisiert ist. Dieser Ring kann auf die der Welle 3 zugewandten Oberfläche des Wellendichtrings 1 aufgespritzt sein. Es kann sich hier auch um einen eingelegten Ring handeln, der auf geeignete Weise mit dem Wellendichtring 13 verbunden ist. Der Verschleißring 45 kann auch durch eine auf den Wellendichtring 13 aufgebrachte beziehungsweise aufgedampfte Schicht, beispielsweise aus Metall, realisiert sein. Weiterhin kann eine Metallfolie als Verschleißschutzeinrichtung 43 verwendet werden. Denkbar ist es auch, Polyimid oder PEEK (Polyetheretaketon) zu verwenden.

Der in Figur 2 wiedergegebene Wellendichtring 13 wirkt mit einem Stützring 15 zusammen, der anhand von Figur 1 näher erläutert wurde. Die Wellenabdichtung 1 kann in einen CO₂-Kompressor eingesetzt werden, um eine Welle abzudichten, wie dies anhand von Figur 1 erläutert wurde.

Die in den Figuren 1 und 2 wiedergegebenen Wellendichtringe 13 zeichnen sich dadurch aus, dass sie eben ausgebildet sind. Das heißt, sie beziehungsweise deren mit der Welle 3 zusammenwirkende Kante 25 liegen in einer Ebene, die gemäß Figur 1 im eingebauten Zustand des Wellendichtrings 13 im wesentlichen senkrecht auf der Drehachse 17 liegt.

Figur 3 zeigt im Querschnitt ein weiteres Ausführungsbeispiel eines Wellendichtrings 13 einer Wellenabdichtung 1, die allerdings in Figur 3 nicht näher wiedergegeben ist. Der hier dargestellte Wellendichtring 13 unterscheidet sich von dem anhand von Figur 2 erläuterten in zwei Punkten:

Die CO₂-Sperreinrichtung 39 ist hier in den Wellendichtring 13 integriert. Dieser zeichnet sich also durch eine im Inneren des Grundkörpers 47 des Wellendichtrings verlaufende, als CO₂-Sperreinrichtung 39 dienende Schicht 41 aus, die aus CO₂-dichtem Material besteht, welches anhand der Figuren 1 und 2 bereits näher erläutert wurde.

Ein weiterer Unterschied besteht darin, dass die mit der Wellenoberfläche der hier nicht dargestellten Welle zusammenwirkende Kante 25 des Wellendichtrings 13 nicht auf einer gedachten Kreisbahn verläuft, die in einer Ebene liegt. Vielmehr beschreibt die Kante 25 eine auf einer gedachten Kreiszylindermantelfläche liegende Wellenlinie. Diese Ausgestaltung dient dazu, die Elastizität des Wellendichtrings 13 in radialer Richtung zu verbessern. Wellendichtringe 13 mit einer derartigen wellenlinienförmigen Kante 25 zeichnen sich noch dadurch aus, dass die Wärmeabfuhr verbessert ist. Außerdem wird der Verschleiß im Bereich der Wellenoberfläche 19 gleichmäßiger, was zu höheren Standzeiten führt. Vorzugsweise wird bei einem derartig gewellten Wellendichtring die Schicht 41 der CO₂-Sperreinrichtung 39 ebenfalls gewellt ausgebildet, so dass die Schicht 41 im Bereich der wellenlinienförmigen Kante 25 vorhanden ist.

Die Schicht 41 ist so im Grundkörper 47 des Wellendichtrings 13 angeordnet, dass diese im Bereich der Kante 25 aus dem Grundkörper 47 austritt. Insbesondere wenn als CO₂-Sperreinrichtung 39 eine aus Metall bestehende Schicht 41 eingesetzt wird, ergibt sich eine hohe Verschleißfestigkeit der Kante 25. Bei einer derartigen Ausgestaltung kann die CO₂-Sperreinrichtung 39 gleichzeitig als Verschleißschutzeinrichtung 43 wirken. Bei dem in Figur 3 wiedergegebenen Beispiel des Wellendichtrings 13 verläuft die Schicht 41, ausgehend von der Kante 25, etwa unter 45° nach links innerhalb des Grundkörpers 47 und verläuft dann in der Nähe der radial außenliegenden Außenfläche 31 in einer in Figur 3 senkrecht stehenden geraden Linie.

Bei dem in Figur 3 dargestellten Ausführungsbeispiel des Wellendichtrings 13 ist in dessen Außenfläche 31 eine Vertiefung 49 vorgesehen, deren Grund im Schnitt kreisbogenförmig verläuft. Es ist hier möglich, einen O-Ring mit dem Wellendichtring 13 zu kombinieren und beide unmittelbar in eine Nut einzusetzen, wie sie anhand von Figur 1 erläutert wurde und die dort die Wellenabdichtung 1 aufnimmt. Es ist also möglich, die Wellenabdichtung in einer vereinfachten Version zu realisieren und auf den Stützring 15 und den Haltering 29 zu verzichten, vielmehr also den Wellendichtring 13 unmittelbar als Wellenabdichtung 1 zu verwenden.

Selbstverständlich kann bei der vereinfachten Ausführungsform der Wellenabdichtung 1 der Wellendichtring 13 beziehungsweise dessen Grundkörper 47 selbst aus einem CO₂-dichten Material bestehen, so dass der Wellendichtring selbst die CO₂-Sperreinrichtung bildet. Es ist auch möglich, wie anhand von Figur 2 erläutert, auf der der CO₂₋Atmosphäre zugewandten Oberfläche des Wellendichtrings 13 eine CO₂-Sperreinrichtung aufzubringen, die als Beschichtung, Bedampfung oder Folie ausgebildet ist.

Aus der Beschreibung zu Figur 3 ist im übrigen noch ersichtlich, dass die CO₂-Sperreinrichtung 39, wie sie anhand von Figur 3 erläutert wurde, auch bei einem Wellendichtring 13 vorgesehen werden kann, wie er anhand der Figuren 1 und 2 erläutert wurde. Es ist also auch dort möglich, eine CO₂-dichte Schicht 41 im Inneren des Wellendichtrings 13 vorzusehen. Die verschiedenen Ausgestaltungen der CO₂-Sperreinrichtung können also mit einander kombiniert werden.

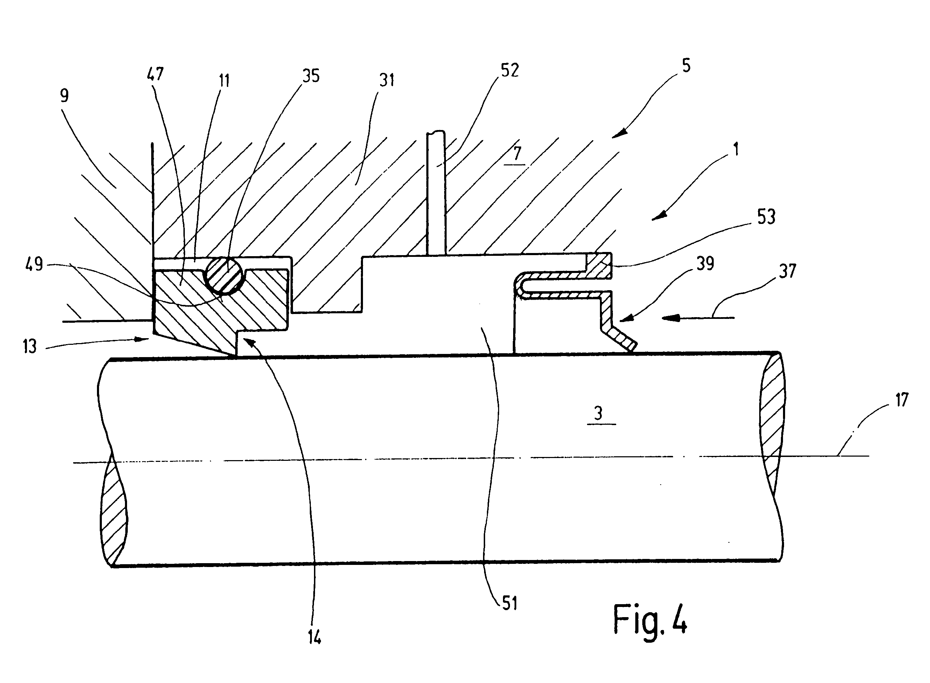

Figur 4 zeigt ein weiteres Ausführungsbeispiel einer Wellenabdichtung 1. Teile, die anhand der vorangegangenen Figuren erläutert wurden, sind hier mit gleichen Bezugszeichen versehen, so dass insoweit auf die Beschreibung zu den Figuren 1 bis 3 verwiesen wird.

Der Grundkörper 47 des in Figur 4 im Schnitt dargestellten Wellendichtrings 13 zeigt im wesentlichen die gleiche Form, wie sie bereits in Figur 3 wiedergegeben wurde. Deutlich ist hier der O-Ring 35 erkennbar, der in die in die Außenfläche 31 eingebrachte Vertiefung 49 eingelegt ist und zur radial äußeren Abdichtung des Wellendichtrings 13 innerhalb der Nut 11 dient.

Die hier dargestellte Wellenabdichtung 1 unterscheidet sich von den oben beschriebenen dadurch, dass hier ein Vorratsraum 51 zwischen dem ersten Gehäuseteil 7 des CO₂-Kompressors 5 und der Welle 3 ausgebildet wird. Dieser Vorratsraum 51 erstreckt sich ringförmig um die Welle 3. Er ist einerseits, in Figur 4 links, durch den Wellendichtring 13 und andererseits, in Figur 4 rechts, durch eine Verschlusseinrichtung 53 abgeschloseen. Er nimmt ein Sperrmedium auf, in dem CO₂ nicht oder nur in einem sehr geringen Umfang lösbar ist. Denkbar ist es, hier Silikonöl oder Glycerin einzusetzen. Es kann ein Füllkanal 52 vorgesehen werden, über den das Sperrmedium in den Vorratsraum 51 einbringbar ist und der auch zum Ausgleich eines Sperrmediumsverlusts verwendet werden kann. Der Vorratsraum 51 kann daher relativ klein gewählt werden.

Die Verschlusseinrichtung 53 ist - wie in Figur 4 dargestellt - vorzugsweise als sogenannter Rollbalg ausgebildet, der nachgiebig ausgebildet ist, so dass auch bei einer auf Undichtigkeit beruhenden Verminderung des Sperrmediums und/oder bei Wärmedehnung des Sperrmediums ein dichter Abschluss des Vorratsraums 51 gewährleistet werden kann. Die ringförmige Verschlusseinrichtung 53 kann auch - ohne als Rollbalg ausgebildet zu sein- auf der Welle 3 in Richtung der Drehachse 17 verschieblich ausgebildet, beispielsweise als axial verschieblicher Kolben beziehungsweise als axial verschieblicher Wellendichtring realisiert sein, um eine Verminderung und/oder Wärmedehnung des Sperrmediums ausgleichen zu können.

Bei dem in Figur 4 dargestellten Beispiel wirkt das unter einem Überdruck stehende CO₂ von rechts auf die Wellenabdichtung 1, was durch den Pfeil 37 verdeutlicht wird. Das im Vorratsraum 51 untergebrachte Sperrmedium verhindert also, dass CO₂ an den Wellendichtring 13 gelangt und dort zu einem unerwünschten Verschleiß führt. Der Verschleiß besteht - bei allen hier angesprochenen Wellendichtringen 13, aber auch bei den erwähnten Gleitringdichtungendarin, dass sich CO₂ im Grundkörper 47 des Wellendichtrings 13 der Gleitringdichtung unter Druck löst. Nimmt beispielsweise im Stillstand des CO₂-Kompressors der Überdruck ab, bildet das im Grundkörper 47 gelöste CO₂ Blasen und zerstört damit den Wellendichtring 13/die Gleitringdichtung.

Bei entsprechender Auslegung der Verschlusseinrichtung 53, also bei Verwendung von CO₂-dichtem Material bei deren Herstellung und bei Verwendung eines Stützrings 15, wie er anhand der Figuren 1 und 2 erläutert wurde, kann gegebenenfalls auf eine Befüllung des Vorratsraums 51 verzichtet werden. Es ist dann nämlich möglich, die Verschlusseinrichtung 53 selbst als CO₂-Sperreinrichtung einzusetzen.

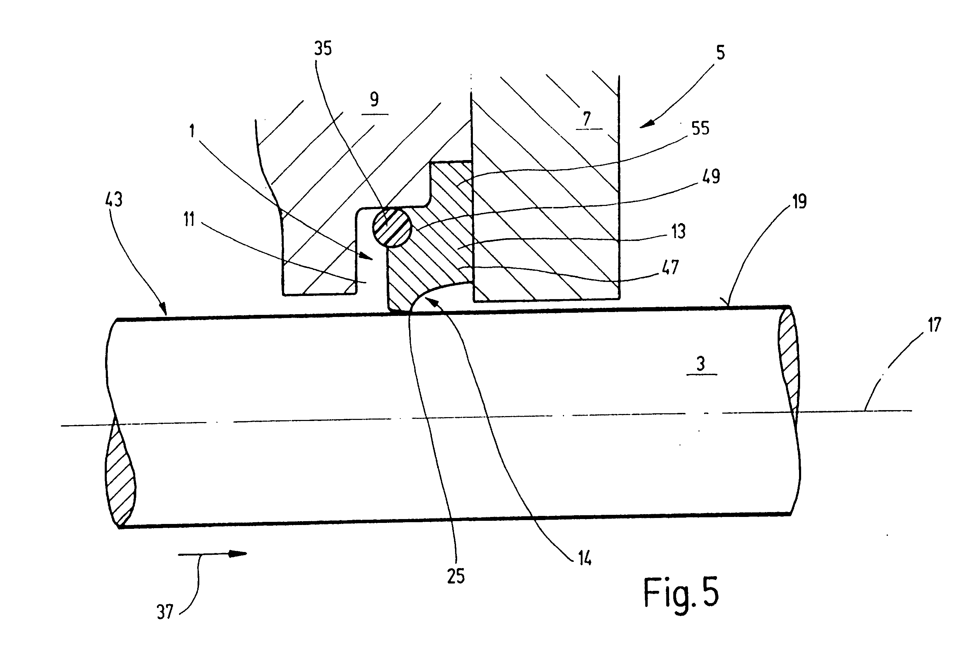

Figur 5 zeigt ein weiteres Ausführungsbeispiel einer Wellenabdichtung 1. Die Wellenabdichtung 1, wie durch den Pfeil 37 angedeutet, wird von links mit unter Überdruck stehendem CO₂ beaufschlagt. Die anhand der vorangegangenen Figuren bereits erläuterten Teile sind mit gleichen Bezugsziffern versehen, so dass auf deren ausführliche Erläuterung hier verzichtet werden kann.

Die Wellenabdichtung 1 umfasst einen Wellendichtring 13, der ohne die Verwendung eines Stütz- oder Halterings in einer Nut 11 untergebracht ist. Er liegt mit einer Kante 25 auf der Wellenoberfläche 19 einer Welle 3 auf. Zur Abdichtung radial nach außen ist ein O-Ring 35 vorgesehen, der in einer Vertiefung 49 im Grundkörper 47 des Wellendichtrings 13 untergebracht ist und mit der Oberfläche der Nut 11 in dichtendem Eingriff steht.

Der Halt des Wellendichtrings 13 wird dadurch verbessert, dass dieser einen radial nach außen vorstehenden, also einen von der Drehachse 17 weggerichteten Vorsprung 55 aufweist, der zwischen dem ersten Gehäuseteil 7 und dem zweiten Gehäuseteil 9 des CO₂₋Kompressors 5 eingespannt ist, so dass der Wellendichtring 13 sicheren Halt findet.

Bei dem in Figur 5 dargestellten Beispiel sind die Kante 25 und der Vorsprung 55 in axialer Richtung, das heißt in Richtung der Drehachse 17, zueinander versetzt. Der Grundkörper 47 eines derartig ausgebildeten Wellendichtrings 13 zeichnet sich durch eine gewisse Eigenelastizität aus. Es ist daher möglich, den Vorsprung 55 fest einzuspannen und dennoch mit Hilfe des O-Rings 35 Anpresskräfte im Bereich der Kante 25 aufzubauen. Dies liegt daran, dass die Kante 25 und der Vorsprung 55 quasi diagonal einander gegenüberliegen und der Grundkörper 47 in grober Annäherung im wesentlichen Z-förmig ausgebildet ist.

Bei dem hier dargestellten Ausführungsbeispiel ist die Welle 3 zur Realisierung einer Verschleißschutzeinrichtung 21 im Bereich der Wellenoberfläche 19 mit einer verschleißfesten Beschichtung versehen, die durch Hartanodisieren oder durch Aufbringen einer Wolframcarbid-, Kohlenstoff-, Aluminiumoxid-, Siliciumcarbid- und/oder Titancarbid-Schicht gebildet wird. Denkbar ist es auch, die Wellenoberfläche 19 lediglich zu härten, was allerdings nicht zu den Standzeiten führt, die in Verbindung mit einer Verschleißschutzeinrichtung der hier angesprochenen Art realisierbar sind.

Im Zusammenhang mit dem in Figur 5 dargestellten Wellendichtring 13 kann die CO₂-Sperreinrichtung 39 verwendet werden, wie sie anhand der vorangegangenen Figuren erläutert wurde: Es ist also möglich, den Wellendichtring 13 selbst aus einem CO₂-dichten Material herzustellen oder mit einer Schicht 41 zu versehen, die CO₂-dicht ist. Diese kann auf die Oberseite des Wellendichtrings 13 aufgebracht oder dessen Grundkörper 47 integriert werden. Schließlich ist es hier -wie übrigens bei den anderen dargestellten Ausführungsbeispielenmöglich, eine Schicht auf der Oberseite des Wellendichtrings als Sperreinrichtung vorzusehen und zusätzlich im Grundkörper 47 eine weitere Schicht aus CO₂-dichtem Material anzuordnen.

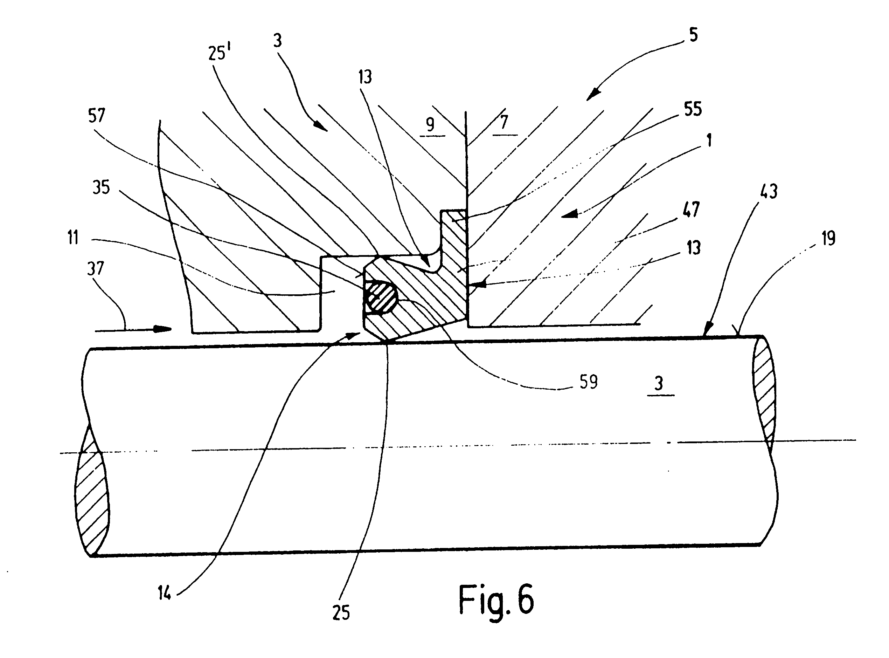

Figur 6 zeigt ein weiteres Ausführungsbeispiel einer Wellenabdichtung 1. Bei dieser Wellenabdichtung 1 wird auf Stütz- und Halteringe verzichtet. Der Wellendichtring 13 ist wiederum in einer Nut 11 untergebracht. Er weist auf seiner einen, in Figur 6 rechten Seite, einen radial nach außen gerichteten Vorsprung 55 auf und auf der gegenüberliegenden Seite eine radial nach innen gerichtete Kante 25, mit der der Wellendichtring 13 auf der Wellenoberfläche 19 der Welle 3 aufliegt. Durch die in axialer Richtung versetzte Anordnung von Vorsprung 55 und Kante 25 ergibt sich wiederum eine Elastizität des Grundkörpers 47, die es erlaubt, den Vorsprung 55 des Wellendichtrings 13 fest zwischen Gehäuse 7 und Deckel 9 des Kompressors 5 einzuspannen und dabei im Bereich der Kante 25 eine radiale Elastizität des Wellendichtrings 13 zu gewährleisten. Dieser ist hier auf seiner nach links gerichteten Seitenfläche 57 mit einer Nut 59 versehen, in die ein O-Ring 35 einbringbar ist. Die Nut 59 ist so tief, daß der O-Ring 35 vollständig in den Grundkörper 47 des Wellendichtrings eingebracht werden kann und diesen quasi aufspreizt. Eine der Kante 25 gegenüberliegende Außenkante 25' dichtet radial außen im Bereich der Nut 11 ab.

Durch einen Pfeil 37 ist angedeutet, dass das unter Überdruck stehende CO₂ von links auf den Wellendichtring 13 einwirkt. Die Nut 59 wird daher auch mit dem Überdruck beaufschlagt, so dass der Grundkörper 47 bei steigendem Druck mehr und mehr aufgespreizt wird, und die Dichtwirkung des Wellendichtrings 13 verstärkt wird.

Bei dem hier dargestellten Ausführungsbeispiel ist für die Welle 13 im Bereich der Wellenoberfläche 19 eine Verschleißschutzeinrichtung 43 vorgesehen, wie sie oben im Zusammenhang mit der Figur 5 bereits beschrieben wurde. Es wird insoweit auf das oben Gesagte verwiesen.

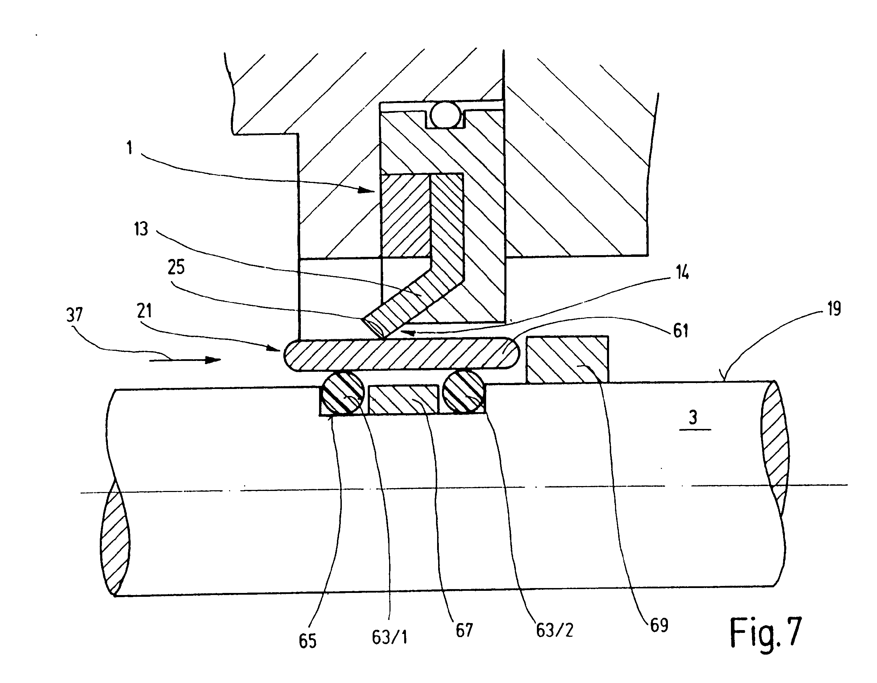

Ein weiteres Ausführungsbeispiel einer Wellenabdichtung 1 ist in Figur 7 wiedergegeben. Der Aufbau der Wellenabdichtung entspricht dem anhand von Figur 1 erläuterten. Es wird daher auf die Beschreibung zu dieser Figur verwiesen.

Der Unterschied zu Figur 1 besteht darin, dass hier eine Verschleißschutzeinrichtung 21 vorgesehen ist, die eine um die Welle 3 umlaufende Verschleißhülse 61 umfasst. Auf dieser liegt der Wellendichtring 13 mit der Kante 25 auf. Er berührt also die Wellenoberfläche 19 nicht mehr unmittelbar.

Die Verschleißhülse 61 kann aus jedem beliebigen verschleißfesten Material hergestellt werden. Besonders geeignet ist unter anderem Keramik. Besonders vorteilhaft ist es, wenn die Verschleißhülse 61 aus einer Keramik mit hoher Wärmeleitfähigkeit, beispielsweise aus Siliciumcarbid besteht. Es ist letztlich auch möglich, Messing für die Herstellung der Verschleißhülse 61 zu verwenden.

Bei dem in Figur 7 dargestellten Ausführungsbeispiel ist zusätzlich vorgesehen, dass die Verschleißhülse 61 zum Ausgleich von Rundlaufabweichungen der Welle 3 elastisch gelagert wird. Hier sind beispielhaft in einem Abstand zueinander angeordnete O-Ringe 63/1 und 63/2 vorgesehen, die zwischen Verschleißhülse 61 und Wellenoberfläche 19 angeordnet sind und aus einem Elastomer, also einem elastischen Material, bestehen. Die O-Ringe sind in einer Nut 65 untergebracht, damit sie in einer gewünschten Position verbleiben. Zusätzlich ist hier ein Abstandhalter 67 zwischen den O-Ringen 63/1 und 63/2 angeordnet. Ein Anschlag 69 hält die Verschleißhülse 61 in ihrer gewünschten Position. Dieser ist hier auf der rechten Seite der Verschleißhülse 61 angeordnet. Auch auf der anderen Seite kann ein derartiger Anschlag vorgesehen werden.

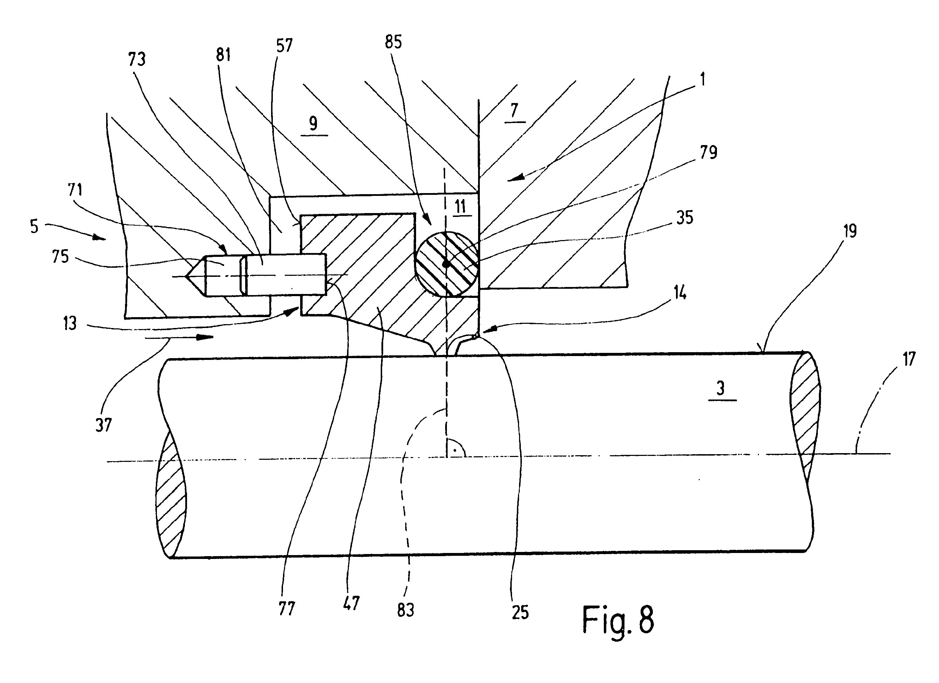

Ein weiteres Ausführungsbeispiel einer Wellenabdichtung 1 wird schließlich in Figur 8 dargestellt. Es handelt sich auch hier um eine Schnittdarstellung, wie sie bereits in den vorangegangenen Figuren verwendet wurde. Zur Vereinfachung ist lediglich der oberhalb der Welle 3 liegende Teil der Wellenabdichtung 3 im Schnitt dargestellt. Teile, die bereits anhand der früheren Figuren erläutert wurden, sind mit gleichen Bezugsziffern versehen.

Die in Figur 8 dargestellte Wellenabdichtung ist nicht Teil der Erfindung. Sie umfasst ein Wellendichtring 13, der ohne die Verwendung eines Stütz- und/oder Halterings in einem CO₂-Kompressor 5 innerhalb einer Nut 11 angeordnet ist. Es ist hier eine Verdrehsicherung 71 vorgesehen, die durch einen Sicherungsstift 73 realisiert ist, der einerseits in eine Bohrung 75 im zweiten Gehäuseteil 9 und andererseits in eine Ausnehmung 77 im Grundkörper 47 des Wellendichtrings 13 eingreift. Er verläuft bei dem hier dargestellten Ausführungsbeispiel im wesentlichen parallel zur Drehachse 17. Entscheidend für die Funktion des Sicherungsstiftes ist jedoch die Kopplung zwischen Wellendichtring 13 und dem zweiten Gehäuseteil 9 des CO₂-Kompressors 5, um eine Drehbewegung des Wellendichtrings 13 gegenüber dem Kompressorgehäuse während einer Rotation der Welle 3 zu verhindern und nur eine bestimmbare Positionierung zu gewährleisten.

Durch einen Pfeil 37 ist angedeutet, dass das unter Überdruck stehende CO₂ von links auf die Wellenabdichtung 1 einwirkt. Durch die Kante 25 des Wellendichtrings 13 wird verhindert, dass das CO₂ über die Wellenabdichtung 1 hinaus in die Atmosphäre gelangt.

Der Wellendichtring 13 wird im Bereich der Kante 25 von einem auf der der Welle 3 abgewandten Seite des Wellendichtrings 13 angeordneten, ebenfalls in der Nut 11 untergebrachten O-Ring 35 gegen die Wellenoberfläche 19 angepresst. Die Kante 25 liegt hier etwa im Bereich des durch einen Punkt angedeuteten Zentrums 79 des 0-Rings 35. Der im Betrieb des CO₂-Kompressors 5 auftretende Druck kann von links bis an die Kante 25 herantreten, wodurch radial nach außen wirkende Kräfte auf den Wellendichtring 13 wirken. Der Druck kann über einen links neben dem Wellendichtring 13 vorgesehenen Spalt 81 auch radial außerhalb des Wellendichtrings 13 auf dessen Grundkörper 47 wirken. Damit werden die von der der Welle 3 zugewandten Seite auf den Wellendichtring 13 wirkenden Druckkräfte kompensiert. Bei dem hier dargestellten Ausführungsbeispiel kann also der CO₂-Druck in die Nut 11 eintreten und auf die von der Welle 3 abgewandten Seite des Wellendichtrings 13 einwirken. Der O-Ring 35 dichtet also nicht gegenüber dem radial außenliegenden Nutgrund ab, sondern seitlich gegenüber dem ersten Gehäuseteil 7 einerseits und andererseits gegenüber dem Grundkörper 47 des Wellendichtrings 13. Die von außen nach innen in Richtung der Wellenoberfläche 19 wirkenden Druckkräfte werden nach dem oben Gesagten in dem Bereich des Wellendichtrings 13 von Gegenkräften aufgehoben, der sich von der linken Seitenfläche 57 des Wellendichtrings 13 bis zur Kante 25 erstreckt. Jenseits der Kante 25, also in Figur 8 rechts von der Kante 25, wirkt ein wesentlich reduzierter Druck, in der Regel der Atmosphärendruck. Hier wirken also keine radial nach außen gerichteten Gegenkräfte auf den Grundkörper 47 des Wellendichtrings 13 ein, so dass sich in diesem Bereich ein Kraftüberschuss zum Anpressen der Dichtlippe 25 ergibt. Insgesamt zeigt sich, dass über die gesamte, in axialer Richtung gemessene Breite des Wellendichtrings 13 von außen Druckkräfte auf diesen wirken. Von der linken Seitenfläche 57 bis zu einer mit der Kante 25 zusammenfallenden gestrichelten Linie 83 wirken entsprechende Gegendruckkräfte radial nach außen auf den Grundkörper 47 des Wellendichtrings 13. Rechts von der gestrichelten Linie 83, also rechts von der Kante 25, gibt es keine derartigen radial nach außen gerichteten Gegendruckkräfte. Der Bereich rechts von der Linie 83, die senkrecht auf der Drehachse 17 steht, werden also Anpresskräfte aufgebaut, die den Wellendichtring 13 gegen die Wellenoberfläche 19 anpressen. Je nach der Größe des verbleibenden, rechts von der Linie 83 liegenden Bereichs des Wellendichtrings 13 variieren also die von außen in Richtung auf die Drehachse 17 wirkenden Anpresskräfte. Verbreitert man also den Wellendichtring 13 rechts von der Linie 83, erhöhen sich die Anpresskräfte Wird dieser Bereich umgekehrt verkleinert, werden die Anpresskräfte reduziert.

Nach allem zeigt sich, dass der in Figur 8 dargestellte Wellendichtring 13 in wesentlichen Bereichen druckentlastet ist, wobei durch den Aufbau des Wellendichtrings 13 und dessen Unterbringung innerhalb der Nut 11 beziehungsweise durch den Spalt 81 letztlich eine Entlastungseinrichtung 85 geschaffen wird, mit deren Hilfe die Anpresskräfte des Wellendichtrings 13 gegen die Wellenoberfläche 19 begrenzt beziehungsweise eingestellt werden können. Der Verschleiß des Wellendichtrings 13 ist auf diese Weise einfach reduzierbar.

Selbstverständlich kann der Wellendichtring 13 und/oder die Wellenoberfläche 19 mit einer Verschleißschutzeinrichtung 21 oder 43 versehen sein. Die Verschleißschutzeinrichtungen 21 und 43 sind im Zusammenhang mit den Figuren 1, 2, 3, 4, 5, 6 und 7 beschrieben.

Für die anhand der Figuren 5 bis 8 beschriebenen Wellendichtringe 13 können die oben beschriebenen CO₂-Einrichtungen Verwendung finden. Es ist also möglich, den Grundkörper 47 der Wellendichtringe 13 aus CO₂-dichtem Material herzustellen oder Schichten auf- beziehungsweise einzubringen, die aus CO₂-dichtem Material bestehen. Außerdem ist es möglich, mehrere CO₂-Sperren zu kombinieren, also eine Beschichtung mit einer Bedampfung und/oder einer Folie. Schließlich ist es auch möglich, diese Wellendichtringe mit einer Verschlusseinrichtung und einem Vorratsraum zu kombinieren, um ein CO₂-dichtes Sperrmedium vorzusehen.

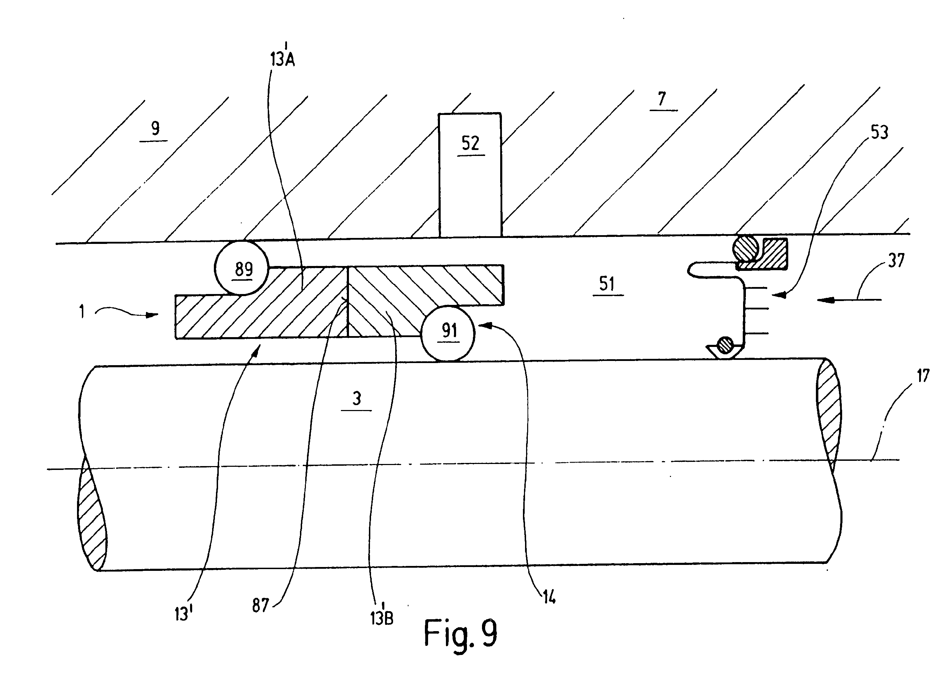

Figur 9 zeigt eine ebenfalls nicht zur Erfindung gehörende Wellenabdichtung 1. Sie ist letztlich vergleichbar mit dem in Figur 4 dargestellten Ausführungsbeispiel. Der Unterschied des hier dargestellten Ausführungsbeispiels gegenüber dem in Figur 4 besteht darin, dass anstelle eines Wellendichtrings eine als Abdichteinrichtung 14 dienende Gleitringdichtung 13' verwendet wird. Aufbau und Funktion von Gleitringdichtungen sind bekannt, so dass hier nur auf das aus der Prinzipskizze gemäß Figur 9 ersichtliche Grundprinzip eingegangen werden soll. Die Gleitringdichtung 13' umfasst einen ersten mit einem ersten Gehäuseteil 9 zusammenwirkenden Gleitring 13'A und einem zweiten mit der Welle 3 zusammenwirkenden zweiten Gleitring 13'B. Bei einer Rotation der Welle 3 dreht sich also der zweite Gleitring 13'B mit der Welle gegenüber dem feststehenden ersten Gleitring 13'A. Zwischen den beiden Gleitringen befindet sich die eigentliche Dichtfläche 87. Die beiden Gleitringe liegen über geeignete Dichtungseinrichtungen, die hier beispielhaft als O-Ringe dargestellt sind, an dem zweiten Gehäuseteil 9 beziehungsweise an der Welle 3 an. Dabei ist der erste O-Ring 89 dem ersten Gleitring 13'A und der zweite O-Ring 91 dem zweiten Gleitring 13'B zugeordnet.

Rechts neben der Gleitringdichtung 13' befindet sich ein Vorratsraum 51, der - wie bei dem Ausführungsbeispiel gemäß Figur 4- mit einem Sperrmedium gefüllt ist, in dem CO₂ nicht oder nur in einem geringen Umfang löslich ist. Der Vorratsraum 51 wird über eine Verschlusseinrichtung 53 gegenüber dem von dem CO₂-Kompressor geförderten Medium abgeschlossen, das heißt der CO₂-Druck wirkt gemäß des Pfeils 37 von rechts auf die Wellenabdichtung 1. Die Verschlusseinrichtung 53 ist hier wiederum beispielhaft als Rollbalg ausgebildet, der einerseits dichtend am ersten Gehäuseteil 7 und andererseits an der Welle 3 anliegt und damit den Vorratsraum 51 dicht abschließt. Rollbälge der hier angesprochenen Art sind bekannt, so dass auf deren Aufbau und Funktion nicht näher eingegangen wird. Wesentlich ist nur, dass ein Volumenverlust innerhalb des Vorratsraums dadurch ausgeglichen werden kann, dass beispielsweise die an der Welle 3 anliegenden Teile des Rollbalgs gegenüber jenen Bereichen verschieblich angeordnet sind, die an dem ersten Gehäuseteil 7 anliegen. Denkbar ist es auch, anstelle des Rollbalgs einen in axialer Richtung verschieblichen Wellendichtring einzusetzen, der dichtend am ersten Gehäuseteil 7 und an der Welle 3 anliegt und in axialer Richtung, das heißt in Richtung der Drehachse 17, verschieblich ist.

Das in dem Vorratsraum 51 vorgesehene Sperrmedium kann beispielsweise über den Füllkanal 52 eingebracht werden.

Aus der Darstellung gemäß Figur 9 wird ersichtlich, dass das CO₂ nicht unmittelbar an die Gleitringdichtung 13' herantritt, sondern vielmehr von der Verschlusseinrichtung 53 und dem im Vorratsraum 51 vorhandenen Sperrmedium abgehalten wird.

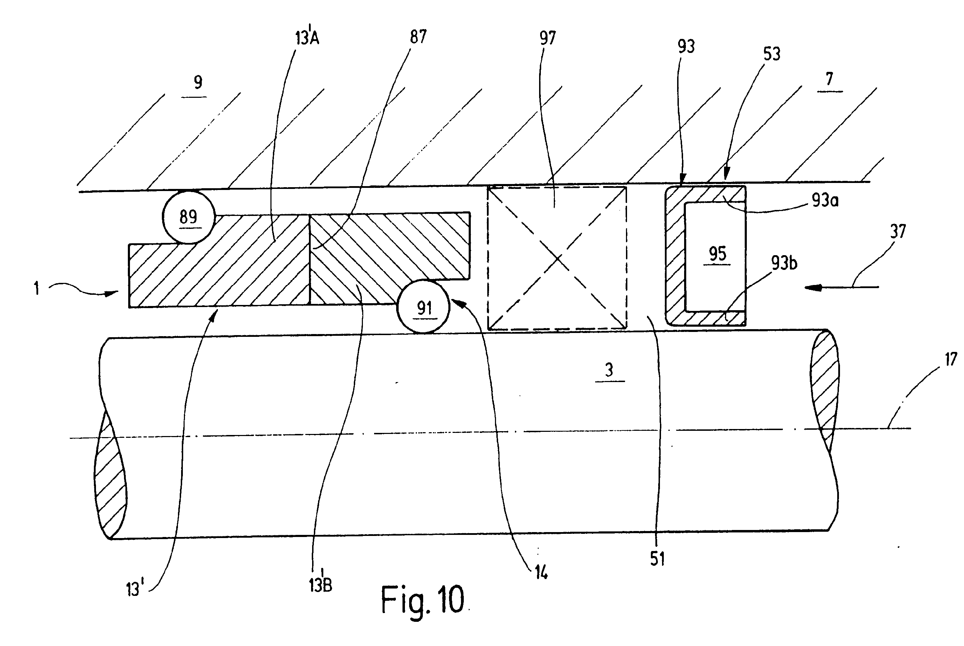

Figur 10 zeigt eine abgewandelte nicht zur Erfindung gehörende Wellenabdichtung 1, bei der wiederum eine als Abdichteinrichtung 14 dienende Gleitringdichtung 13' eingesetzt wird. Auch hier ist eine stark vereinfachte Prinzipskizze vorgesehen, da Aufbau und Grundfunktion einer Gleitringdichtung bekannt sind. Rechts von der Gleitringdichtung 13' befindet sich wiederum ein Vorratsraum 51, der gegenüber dem von dem CO₂-Kompressor geförderten Medium, welches gemäß des Pfeils 37 von rechts auf die Wellenabdichtung 1 wirkt, durch eine Verschlusseinrichtung 53 abgeschlossen ist. Bei dem in Figur 10 wiedergegebenen Ausführungsbeispiel weist die Verschlusseinrichtung 53 einen in axialer Richtung verschieblichen Ringkolben 93 auf, der auf seiner mit Druck beaufschlagten Seite, gemäß Figur 10 also rechts, mit einer Ringnut 95 versehen ist. Im Querschnitt gesehen ist der Grundkörper des Ringkolbens 93 also im wesentlichen U-förmig. Er umfasst zwei Schenkel 93a und 93b, die durch den durch den Pfeil 37 angedeuteten Druck auseinander gepresst werden, wobei der erste Schenkel 93a am ersten Gehäuseteil 7 und der zweite Schenkel 93b an der Welle 3 anliegt. Dadurch erhöht sich die Dichtwirkung des Ringkolbens 93.

Dadurch, dass der Ringkolben 93 in Richtung der Drehachse 17 verschieblich ist, können Volumenschwankungen innerhalb des Vorratsraumes 51 ausgeglichen werden.

In Figur 10 ist beispielhaft gestrichelt eine Lagereinrichtung 97 angedeutet, die zwischen der Gleitringdichtung 13' und Verschlusseinrichtung 53 innerhalb des Sperrmediums angeordnet ist. Die Lagereinrichtung kann allgemein zur Lagerung der Welle verwendet werden. Die Anordnung hat den Vorteil, dass das Sperrmedium auch als Lagerschmiermittel herangezogen wird und damit eine separate Lagerschmiermittelversorgung eingespart wird.

Eine derartige Lagereinrichtung kann selbstverständlich auch bei dem in Figur 9 dargestellten Ausführungsbeispiel Verwendung finden, aber auch bei dem Ausführungsbeispiel, das in Figur 4 dargestellt ist. Auf eine Wiedergabe der Lagereinrichtung 97 wurde in den Figuren 9 und 4 verzichtet.

Die in den Figuren 9 und 10 angedeutete Dichtfläche 87 zwischen dem ersten Gleitring 13'A und dem zweiten Gleitring 13'B kann mit einer Verschleißschutzeinrichtung 21, 43versehen sein, vorzugsweise mit einer Beschichtung beziehungsweise Bedampfung aus verschleißfestem Material, wie es oben anhand des Wellendichtrings angesprochen wurde.

Ein Vergleich der in den Figuren 1 bis 10 dargestellten Wellenabdichtungen zeigt, dass diese sowohl Wellendichtringe als auch Gleitringdichtungen umfassen können. Die mit den Gleitringdichtungen versehenen Beispiele zeichnen sich durch einen größeren Raumbedarf aus. Es ist aber festzustellen, dass herkömmliche Gleitringdichtungen auf einfache Weise vor schädigenden Einflüssen des CO₂ geschützt werden können. Es ist auch möglich, bestehende Kompressoren nachzurüsten und deren Gleitringdichtungen vor schädlichen Einflüssen mit Hilfe eines in einem Vorratsraum 51 untergebrachten Sperrmediums zu schützen.

Die Ausführungsbeispiele mit den Wellendichtringen zeichnen sich dadurch aus, dass sie einen geringeren Bauraumbedarf haben und dadurch, dass sie kostengünstig realisierbar sind. In beiden Fällen ist es möglich, schädliche CO₂-Einflüsse auf relativ einfache Weise von den Dichtungen (Wellendichtring beziehungsweise Gleitringdichtung) fernzuhalten.

## Patentansprüche

1. Wellenabdichtung (1) für einen CO₂-Kompressor (5) mit einer Abdichteinrichtung (14) und einer CO₂-Sperreinrichtung, **dadurch gekennzeichnet, dass** die Wellenabdichtung eine Verschleißschutzeinrichtung (21,43) aufweist, um in den Bereichen, in denen sich drehende und feststehende Teile der Wellenabdichtung berühren, den Verschleiß zu reduzieren.

2. Wellenabdichtung (1) nach Anspruch 1, **gekennzeichnet durch** eine die Reibungskräfte zwischen der Wellenabdichtung (1) und einer Welle (3) begrenzenden oder vermindernden Entlastungseinrichtung (85).

3. Wellenabdichtung nach Anspruch 2, **dadurch gekennzeichnet, daß** die Entlastungseinrichtung (85) einen O-Ring (35) zur Abdichtung gegenüber einem Kompressorgehäuseteil (7) aufweist.

4. Wellenabdichtung (1) nach einem der vorhergehenden Ansprüche, **dadurch gekennzeichnet, daß** die Abdichteinrichtung (14) als Wellendichtring (13) ausgebildet ist.

5. Wellenabdichtung nach einem der vorhergehenden Ansprüche, **dadurch gekennzeichnet, daß** die CO₂-Sperreinrichtung (39) durch mindestens eine CO₂-dichte Sperrschicht (41) realisierbar ist.

6. Wellenabdichtung nach Anspruch 5, **dadurch gekennzeichnet, daß** die Sperrschicht (41) durch eine Beschichtung und/oder Bedampfung mit CO₂-dichtem Material realisierbar ist.

7. Wellenabdichtung nach Anspruch 5 oder 6, **dadurch gekennzeichnet, daß** die Sperrschicht (41) durch mindestens eine Folie, vorzugsweise durch eine Metallfolie, realisierbar ist.

8. Wellenabdichtung nach einem der Ansprüche 5 bis 7, **dadurch gekennzeichnet, daß** die Sperrschicht (41) auf die Oberfläche des Wellendichtrings (13) aufgebracht ist.

9. Wellenabdichtung nach einem der Ansprüche 5 bis 8, **dadurch gekennzeichnet, daß** die Sperrschicht (41) mindestens bereichsweise in den Wellendichtring integriert ist.

10. Wellenabdichtung nach einem der vorhergehenden Ansprüche, **dadurch gekennzeichnet, daß** die CO₂-Sperreinrichtung (39) durch den Wellendichtring (13) selbst realisiert ist.

11. Wellenabdichtung nach Anspruch 2, **dadurch gekennzeichnet, daß** sie eine Gleitringdichtung (13') umfasst, und daß die CO₂₋Sperreinrichtung (39) zwischen dem abzudichtenden Medium und der Gleitringdichtung (13') angeordnet ist.

12. Wellenabdichtung nach einem der vorhergehenden Ansprüche, **dadurch gekennzeichnet, daß** die Sperreinrichtung (39) einen mit einem Sperrmedium gefüllten Vorratsraum (51) umfasst.

13. Wellenabdichtung nach Anspruch 12, **dadurch gekennzeichnet, daß** der Vorratsraum (51) durch eine vorzugsweise als Balg, Rollmembran, axial verschieblicher Wellendichtring oder als axial verschieblicher Ringkolben ausgebildete Verschlußeinrichtung (53) abgeschlossen wird.

14. Wellenabdichtung nach einem der vorhergehenden Ansprüche, **dadurch gekennzeichnet, daß** die Sperreinrichtung (39) eine CO₂₋dichte Verschlußeinrichtung (53) umfasst.

15. Wellenabdichtung nach einem der Ansprüche 4-14, **dadurch gekennzeichnet, daß** der Wellendichtring (13) mit der Verschleißschutzeinrichtung (21,43) versehen ist.

16. Wellenabdichtung nach Anspruch 4 bis 15, **dadurch gekennzeichnet, daß** die Verschleißschutzeinrichtung (21,43) als mit dem Wellendichtring (13) verbundener Verschleißring (45) oder als mit der Welle (3) zusammenwirkender Ring (61) ausgebildet ist.

17. Wellenabdichtung nach Anspruch 16, **dadurch gekennzeichnet, daß** der Verschleißring (45) auf der der Welle (3) zugewandten Oberfläche des Wellendichtrings (13) angeordnet ist.

18. Wellenabdichtung nach einem der vorhergehenden Ansprüche, **dadurch gekennzeichnet, daß** die auf der Welle (3) aufliegende Kante (25) des Wellendichtrings (13) gewellt ausgebildet ist.

19. Wellenabdichtung nach einem der vorhergehenden Ansprüche, **dadurch gekennzeichnet, daß** der Verschleißring (45) des Wellendichtrings (13) gewellt ausgebildet ist.

## Claims

1. A shaft sealing device (1) for a CO₂ compressor (5), comprising a sealing device (14) and a CO₂ barrier device, **characterized in that** the shaft sealing device has an anti-wear device (21, 43) in order to reduce wear in the regions in which rotating and stationary parts of the shaft sealing device are in contact with each other.

2. The shaft sealing device (1) according to claim 1, **characterized by** a relieving device (85) which limits or reduces the frictional forces between the shaft sealing device (1) and a shaft (3).

3. The shaft sealing device according to claim 2, **characterized in that** the relieving device (85) has an O-ring (35) to effect sealing in relation to a compressor housing part (7).

4. The shaft sealing device (1) according to any one of the preceding claims, **characterized in that** the sealing device (14) is realized as a shaft sealing ring (13).

5. The shaft sealing device according to any one of the preceding claims, **characterized in that** the CO₂ barrier device (39) can be realized by at least one CO₂-tight barrier layer (41).

6. The shaft sealing device according to claim 5, **characterized in that** the barrier layer (41) can be realized by CO₂-tight material applied as a coating and/or as a vapour deposit.

7. The shaft sealing device according to either of claims 5 or 6, **characterized in that** the barrier layer (41) can be realized by at least one foil, preferably by a metal foil.

8. The shaft sealing device according to any one of claims 5 to 7, **characterized in that** the barrier layer (41) is applied to the surface of the shaft sealing ring (13).

9. The shaft sealing device according to any one of claims 5 to 8, **characterized in that** the barrier layer (41) is integrated, at least in regions, into the shaft sealing ring.

10. The shaft sealing device according to any one of the preceding claims, **characterized in that** the CO₂ barrier device (39) is realized by the shaft sealing ring (13) itself.

11. The shaft sealing device according to claim 2, **characterized in that** it comprises a floating ring seal (13'), and the CO₂ barrier device (39) is disposed between the medium to be sealed and the floating ring seal (13').

12. The shaft sealing device according to any one of the preceding claims, **characterized in that** the barrier device (39) comprises a storage space (51) filled with a barrier medium.

13. The shaft sealing device according to claim 12, **characterized in that** the storage space (51) is closed by a closure device (53), which is preferably realized as a bellows, a roller diaphragm, an axially displaceable shaft sealing ring or an axially displaceable annular piston.

14. The shaft sealing device according to any one of the preceding claims, **characterized in that** the barrier device (39) comprises a CO₂-tight closure device (53).

15. The shaft sealing device according to any one of claims 4 to 14, **characterized in that** the shaft sealing ring (13) is provided with the wearing protection device (21, 43).

16. The shaft sealing device according to claims 4 to 15, **characterized in that** the anti-wear device (21, 43) is realized as a wearing ring (45) which is connected to the shaft sealing ring (13), or as a ring (61) which cooperates with the shaft (3).

17. The shaft sealing device according to claim 16, **characterized in that** the wearing ring (45) is disposed on the surface of the shaft sealing ring (13) that faces towards the shaft (3).

18. The shaft sealing device according to any one of the preceding claims, **characterized in that** the edge (25) of the shaft sealing ring (13) that bears on the shaft (3) is of undulated form.

19. The shaft sealing device according to any one of the preceding claims, **characterized in that** the wearing ring (45) of the shaft sealing ring (13) is of undulated form.

## Revendications

1. Dispositif d'étanchéité d'arbre (1) destiné à un compresseur à CO₂ (5), comportant un dispositif d'étanchéité (14) et un dispositif de barrage au CO₂, **caractérisé en ce que** le dispositif d'étanchéité d'arbre comporte un dispositif de protection contre l'usure (21, 43) afin de réduire l'usure dans les zones dans lesquelles des éléments tournants ou fixes du dispositif d'étanchéité d'arbre entrent en contact.

2. Dispositif d'étanchéité d'arbre (1) selon la revendication 1, **caractérisé par** un dispositif de délestage (85) limitant ou réduisant les forces de frottement entre le dispositif d'étanchéité d'arbre (1) et un arbre (3).

3. Dispositif d'étanchéité d'arbre selon la revendication 2, **caractérisé en ce que** le dispositif de délestage (85) comporte un joint torique (35) assurant l'étanchéité par rapport à une partie de carter de compresseur (7).

4. Dispositif d'étanchéité d'arbre (1) selon l'une des revendications précédentes, **caractérisé en ce que** le dispositif d'étanchéité (14) est réalisé sous la forme d'une bague d'étanchéité d'arbre (13).

5. Dispositif d'étanchéité d'arbre (1) selon l'une des revendications précédentes, **caractérisé en ce que** le dispositif de barrage au CO₂ (39) est réalisable par au moins une couche de barrage (41) étanche au CO₂.

6. Dispositif d'étanchéité d'arbre selon la revendication 5, **caractérisé en ce que** la couche de barrage (41) est réalisable par dépôt et/ou par vaporisation d'un matériau étanche au CO₂.

7. Dispositif d'étanchéité d'arbre selon la revendication 5 ou 6, **caractérisé en ce que** la couche de barrage (41) est réalisable par au moins une feuille, de préférence par une feuille métallique.

8. Dispositif d'étanchéité d'arbre selon l'une des revendications 5 à 7, **caractérisé en ce que** la couche de barrage (41) est appliquée à la surface de la bague d'étanchéité d'arbre (13).

9. Dispositif d'étanchéité d'arbre selon l'une des revendications 5 à 8, **caractérisé en ce que** la couche de barrage (41) est intégrée dans la bague d'étanchéité d'arbre au moins par zones.

10. Dispositif d'étanchéité d'arbre selon l'une des revendications précédentes, **caractérisé en ce que** le dispositif de barrage au CO₂ (39) est réalisé par la bague d'étanchéité d'arbre (13) même.

11. Dispositif d'étanchéité d'arbre selon la revendication 2, **caractérisé en ce qu'**il comprend une garniture mécanique d'étanchéité (13') et **en ce que** le dispositif de barrage au CO₂ (39) est disposé entre le médium à étancher et la garniture mécanique d'étanchéité (13').

12. Dispositif d'étanchéité d'arbre selon l'une des revendications précédentes, **caractérisé en ce que** le dispositif de barrage (39) comprend un réservoir (51) rempli d'un médium de barrage.

13. Dispositif d'étanchéité d'arbre selon la revendication 12, **caractérisé en ce que** le réservoir (51) est fermé par un dispositif de fermeture (53) réalisé de préférence sous la forme d'un soufflet, d'une membrane déroulante, d'une bague d'étanchéité d'arbre à déplacement axial ou d'un piston annulaire à déplacement axial.

14. Dispositif d'étanchéité d'arbre selon l'une des revendications précédentes, **caractérisé en ce que** le dispositif de barrage (39) comprend un dispositif de fermeture (53) étanche au CO₂.

15. Dispositif d'étanchéité d'arbre selon l'une des revendications 4 à 14, **caractérisé en ce que** la bague d'étanchéité d'arbre (13) est munie du dispositif de protection contre l'usure (21, 43).

16. Dispositif d'étanchéité d'arbre selon les revendications 4 à 15, **caractérisé en ce que** le dispositif de protection contre l'usure (21, 43) est réalisé sous la forme d'une bague d'usure (45) reliée à la bague d'étanchéité d'arbre (13) ou sous la forme d'une bague (61) coopérant avec l'arbre (3).

17. Dispositif d'étanchéité d'arbre selon la revendication 16, **caractérisé en ce que** la bague d'usure (45) est disposée sur la face de la bague d'étanchéité d'arbre (13) tournée vers l'arbre (3).

18. Dispositif d'étanchéité d'arbre selon l'une des revendications précédentes, **caractérisé en ce que** l'arête (25) de la bague d'étanchéité d'arbre (13) reposant sur l'arbre (3) est réalisée sous une forme ondulée.

19. Dispositif d'étanchéité d'arbre (1) selon l'une des revendications précédentes, **caractérisé en ce que** la bague d'usure (45) de la bague d'étanchéité d'arbre (13) est réalisée sous une forme ondulée.
